# EUROPÄISCHE PATENTSCHRIFT

(11) **EP 2 323 870 B1**
(45) Veröffentlichungstag und Bekanntmachung des Hinweises auf die Patenterteilung: **23.05.2012**
(21) Anmeldenummer: 09778149.6
(22) Anmeldetag: 27.08.2009
(51) Int. Cl.: B60R 21/045

(54) **INSTRUMENTENTAFEL FÜR EIN FAHRZEUG**
INSTRUMENT PANEL FOR A VEHICLE
TABLEAU DE BORD POUR UN VEHICULE

(30) Priorität: 05.09.2008 DE 102008046120
(43) Veröffentlichungstag der Anmeldung: 25.05.2011
(73) Patentinhaber: Volkswagen Aktiengesellschaft, 38436 Wolfsburg (DE)
(72) Erfinder: FISCHER, Gerd, 38124 Braunschweig (DE); JÖHNK, Benno, 38550 Isenbüttel (DE)
(86) Internationale Anmeldenummer: PCT/EP2009/006211
(87) Internationale Veröffentlichungsnummer: WO 2010/025873

(56) Entgegenhaltungen:
- DE-A1- 2 335 958
- DE-A1- 10 038 567
- DE-C1- 4 105 027

## Beschreibung

Die Erfindung betrifft eine Instrumententafel für ein Fahrzeug nach dem Oberbegriff des Patentanspruches 1.

Eine Instrumententafel eines Kraftfahrzeuges kann beifahrerseitig ein offenes, d. h. ohne zusätzlichen Deckel vorgesehenes Ablagefach im Kniebereich eines Fahrzeuginsassen aufweisen. Damit einer Verletzungsgefahr des Fahrzeuginsassen bei einem unfallbedingten Knieaufprall entgegengewirkt wird, kann das Ablagefach deformierbar gestaltet sein.

So ist aus der DE 100 38 567 A1 eine gattungsgemäße Instrumententafel für ein Fahrzeug bekannt, die ein zum Fahrzeuginnenraum offenes Ablagefach aufweist, das zumindest teilweise von einer Prallwand begrenzt ist, die im Fahrzeugkollisionsfall in einer Schubrichtung eines Fahrzeuginsassen-Knies verlagerbar ist.

Gemäß der DE 41 05 027 C1 ist die Prallwand eines Ablagefaches aus einer Blechhalbschale ausgebildet. Die Blechhalbschale ist im Normalfall ausreichend formstabil gestaltet, damit darauf Gegenstände abgelegt werden können. Andererseits ist die Blechhalbschale im Kollisionsfall bei einem Knie-Aufprall unter Energieabsorbtion ausreichend deformierbar.

Die Aufgabe der Erfindung besteht darin, eine Instrumententafel für ein Fahrzeug bereitzustellen, deren offenes Ablagefach bei einem unfallbedingten (Knie-)Aufprall eines Fahrzeuginsassen deformierbar ist.

Die Aufgabe wird durch die Merkmale des Patentanspruches 1 gelöst. Vorteilhafte Weiterbildungen der Erfindung sind in den Unteransprüchen offenbart.

Gemäß dem kennzeichnenden Teil des Patentanspruches 1 ist die Prallwand des Ablagefaches vorzugsweise jeweils seitlich auf zumindest einem Bewegungsanschlag abgestützt, der eine Bewegung der Prallwand entgegen einer Knie-Schubrichtung begrenzt und eine Bewegung in der Knie-Schubrichtung zulässt. Mit dem erfindungsgemäßen Bewegungsanschlag ist im Normalfall eine formstabile Abstützung der Prallwand gewährleistet, wodurch deren Trag- und Ablagefunktion sichergestellt ist. Durch die zusätzliche Abstützung der Prallwand auf dem Bewegungsanschlag kann die Steifigkeit des Ablagefachs im Hinblick auf eine verbesserte Deformierbarkeit reduziert werden.

Zur Ausbildung des seitlichen Bewegungsanschlages kann die Prallwand über eine Keilverbindung an zumindest einen seitlichen Stützabschnitt angebunden sein. Der Stützabschnitt kann einerseits beispielhaft die A-Säulenverkleidung sowie andererseits ein Wandabschnitt im Mittelbereich der Instrumententafel sein.

Die Keilverbindung zwischen der Prallwand und dem Stützabschnitt kann durch ein keilförmiges Anschlagteil sowie durch eine korrespondierende keilförmige Ausnehmung gebildet sein, in der das Anschlagteil einsetzbar ist. Der Keilwinkel des Anschlagteiles sowie der korrespondierenden Ausnehmung kann dabei derart ausgelegt sein, dass nach erfolgtem Zusammenfügen das keilförmige Anschlagteil selbsthemmend in der korrespondierenden Ausnehmung festgelegt ist. Das heißt, dass die nach dem Zusammenfügen erzeugte Reibungskraft zwischen den Keilflächen des Anschlagteiles und der korrespondierenden Ausnehmung ein Lösen der Keilverbindung verhindert. Erst bei Beaufschlagung mit einer vorgegebenen Grenzkraft, etwa einer unfallbedingten Knie-Aufprallkraft, kann die Selbsthemmung der Keilverbindung gelöst werden.

Vor diesem Hintergrund kann der Keilwinkel der Keilverbindung zwischen der Prallplatte und dem Stützabschnitt so ausgelegt sein, dass bei einer Belastung der Prallwand entgegen der Schubrichtung die Prallwand gegen den Bewegungsanschlag gedrückt wird. Im Gegensatz dazu kann bei einer in der Schubrichtung wirkenden Belastung mit vorgegebener Größe die Keilverbindung gelöst werden. Für einen einwandfreien Zusammenbau der Prallwand mit dem Stützabschnitt kann das keilförmige Anschlagteil der Keilverbindung nach Art einer Schwalbenschwanzführung in die keilförmige Ausnehmung einschiebbar sein. In diesem Fall hintergreift das Anschlagteil die Randseiten der keilförmigen Ausnehmung, wodurch die Prallwand in einer Fahrzeugquerrichtung spielfrei festlegbar ist.

Der vom Ablagefach bereitgestellte Stauraum kann durch einen horizontalen Bodenabschnitt des Ablagefaches begrenzt sein, der jeweils in die dem Fahrzeuginnenraum zugewandte Prallwand und/oder in eine Ablagefach-Rückwand übergeht. An den jeweiligen Übergangskanten zwischen dem Bodenabschnitt, der Prallwand und/oder der Rückwand können Sollbiegestellen vorgesehen sein, die jeweils ein Filmscharnier bereitstellen. Bei einer entsprechenden Kraftbeaufschlagung kann die Prallwand bzw. der Bodenabschnitt um die Scharnierachse der Filmscharniere wegklappen.

Fertigungstechnisch bevorzugt ist es, wenn das Ablagefach als separates Bauteil, insbesondere im Kunststoffspritzgussverfahren, hergestellt wird. Das Anschlagteil bzw. die damit korrespondierende Ausnehmung der Keilverbindung können in diesem Fall materialeinheitlich und einstückig im Ablagefach integriert sein.

Beim Zusammenbau kann das Ablagefach mit seiner Rückwand an der Instrumententafel befestigt, insbesondere verschraubt, werden. Zusätzlich kann das Ablagefach mit seiner Prallwand jeweils seitlich in Keilverbindung mit dem zugeordneten Stützabschnitt gebracht werden.

Zur Erhöhung der Steifigkeit der Prallwand kann diese zusätzlich eine Versteifungsstruktur aufweisen. Beispielhaft kann die Prallwand ein doppelwandig ausgebildetes Hohlprofilteil sein oder mit Verstärkungsrippen und/oder versteifenden Einsatzteilen, etwa Blechteilen, ausgestattet sein.

Nachfolgend ist ein Ausführungsbeispiel der Erfindung anhand der beigefügten Figuren beschrieben.

Es zeigen:
- Fig. 1: in einer perspektivischen Teilansicht den beifahrerseitigen Bereich einer Instrumententafel mit zugeordneter seitlicher Türinnenverkleidung;
- Fig. 2: in einer Seitenansicht das Ablagefach; und
- Fig. 3: eine Schnittdarstellung entlang der Linie I-I aus der Fig. 2.

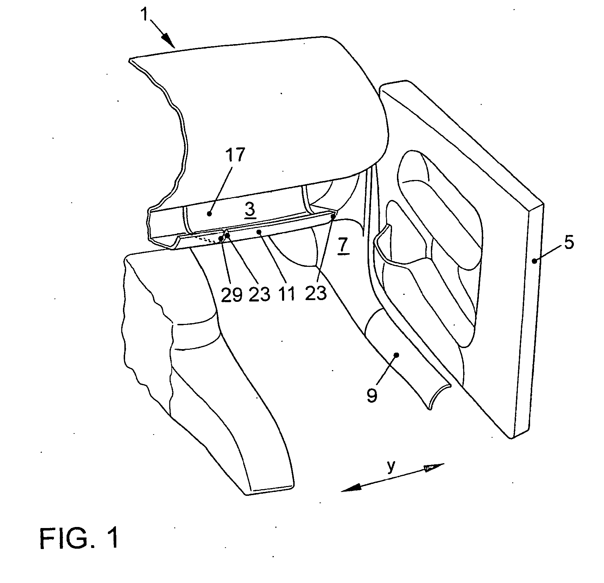

In der Fig. 1 ist der beifahrerseitige Bereich einer Instrumententafel 1 eines Kraftfahrzeuges gezeigt, der an seinem unteren Bereich ein zum Fahrzeuginnenraum offenes Ablagefach 3 aufweist. Der Fahrzeuginnenraum ist in einer Fahrzeugquerrichtung y durch eine Fahrzeugseitentür begrenzt, von der lediglich ein Innenverkleidungsteil 5 gezeigt ist. Das Ablagefach 3 ist in der Fahrzeugquerrichtung y durch ein A-Säulenverkleidungsteil 7 begrenzt, das bodenseitig in einen Türschweller 9 übergeht.

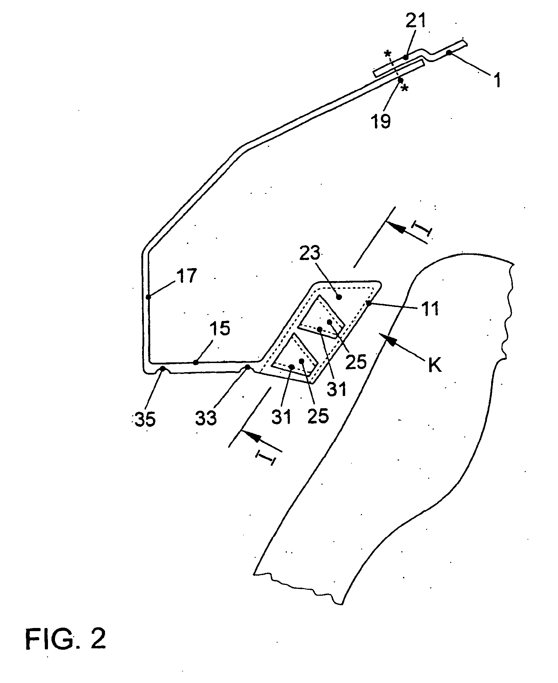

Wie aus der Fig. 1 weiter hervorgeht, begrenzt das Ablagefach 3 einen beifahrerseitigen Fußraum nach oben. Das Ablagefach 3 ist in etwa auf Knie-Höhe eines Fahrzeuginsassen angeordnet, wie es in der Fig. 2 angedeutet ist.

Das Ablagefach 3 weist gemäß den Fig. 1 und 2 eine dem Fahrzeuginnenraum zugewandte Prallwand 11 auf, die das Ablagefach 3 zum Fahrzeuginnenraum hin teilweise begrenzt.

Gemäß der Fig. 2 ist das Ablagefach 3 mit einem in etwa horizontal verlaufenden Bodenabschnitt 15 versehen, von dem die Prallwand 11 schräg in Richtung des Fahrzeuginnenraums hochgezogen ist. Der horizontale Bodenabschnitt 15 geht rückseitig in eine Rückwand 17 über. Diese ist in einem Abstand oberhalb des Bodenabschnittes 15 und der Prallwand 11 in Richtung des Fahrzeuginnenraums abgewinkelt, so dass sie das Ablagefach 3 nach oben begrenzt. Außerhalb ist die Rückwand 17 über eine Schraubverbindung 19 mit einem Befestigungsflansch 21 der Instrumententafel 1 verbunden.

Die Prallwand 11 ist gemäß der Fig. 2 als ein rinnenförmiges, bodenseitig offenes Hohlprofil ausgebildet, das jeweils seitlich durch Seitenwände 23 geschlossen ist. Im Einbauzustand des Ablagefaches 3 in der Instrumententafel 1 sind gemäß der Fig.1 die Seitenwände 23 der Prallwand 11 jeweils dem A-Säulenverkleidungsteil 7 und einem im Mittelbereich der Instrumententafel 1 vorgesehenen Wandabschnitt 29 zugewandt. Sowohl in dem A-Säulenverkleidungsteil 7 als auch in dem Instrumententafel-Wandabschnitt 29 sind Bewegungsanschläge 27 angeformt, auf die die Prallwand 11 über ihre Seitenwände 23 entgegen einer in der Fig. 2 gezeigten Knie-Schubrichtung K abgestützt ist.

Die Bewegungsanschläge 27 sind hier beispielhaft je zwei keilförmige Ausnehmungen, die jeweils im A-Säulenverkleidungsteil 7 und im Wandabschnitt 29 vorgesehen sind. In die keilförmigen Ausnehmungen 27 eingesetzt sind gemäß der Fig. 2 korrespondierend gestaltete keilförmige Anschlagteile 25, die jeweils an den Seitenwänden 23 der Prallwand 11 angeformt sind.

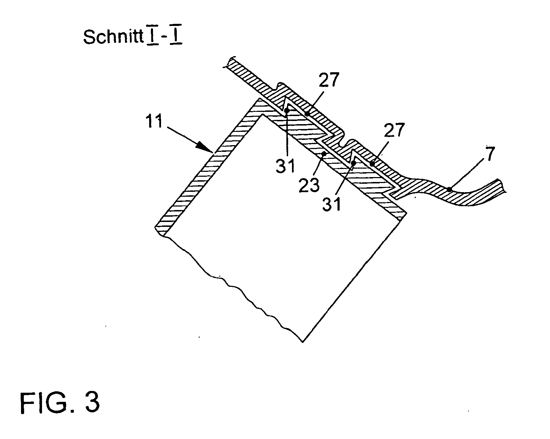

Die einander zugewandten Keilflächen der Anschlagteile 25 sowie der Ausnehmungen 27 laufen entgegen der angedeuteten Knie-Schubrichtung K in einem Keilwinkel α keilförmig aufeinander zu. Die beiden seitlichen Keilflächen der Anschlagteile 25 weisen zudem Hinterschneidungen 31 auf, die nach Art einer Schwalbenschwanzführung die Ausnehmungen 27 seitlich hintergreifen, wie es in der Fig. 3 gezeigt ist.

Das in den Figuren gezeigte Ablagefach 3 ist als ein separates Bauteil unabhängig von der Instrumententafel 1 in einem Kunststoffspritzgussverfahren herstellbar, in dem die beiden Anschlagteile 25 jeweils an beide Seitenwände 23 der Prallwand 11 angeformt werden. Beim Zusammenbau wird das Ablagefach 3 mit seiner Rückwand 17 mit dem Befestigungsflansch 21 der Instrumententafel 1 verschraubt. Zusätzlich wird die Prallwand 11 des Ablagefaches 3 mit ihren beiden seitlichen Anschlagteilen 25 in die zugehörigen Ausnehmungen 27 des Wandabschnittes 29 und des A-Säulenverkleidungsteils 7 eingeschoben. Der von den Keilflächen der Anschlagteile 25 und den Ausnehmungen 27 aufgespannte Keilwinkel α ist hierbei so ausgelegt, dass sich nach erfolgtem Einschieben der Anschlagteile 25 in die Ausnehmungen 27 eine selbsthemmende Keilverbindung zwischen den Anschlagteilen 25 und den Ausnehmungen 27 ergibt.

Somit stützen sich im Normalfall die Anschlagteile 25 mit ihren Keilflächen auf korrespondierende Keilflächen der Ausnehmungen 27 ab, die nach Art eines Bewegungsanschlages eine Bewegung der Prallwand entgegen der Knie-Schubrichtung K blockieren.

Bei einer Fahrzeugkollision wird das in der Fig. 2 angedeutete Fahrzeuginsassen-Knie in der Schubrichtung K nach vorne verlagert, so dass es gegen eine Prallfläche der Prallwand 11 anstößt. Die Keilverbindung zwischen den Anschlagteilen 25 und den Ausnehmungen 27 wird daher in der Schubrichtung K mit einer Aufprallkraft beaufschlagt. Für den Fall, dass die Aufprallkraft größer ist als die Reibungskräfte zwischen den Keilflächen der Anschlagteile 25 und den Ausnehmungen 27 wird die Selbsthemmung der Keilverbindung gelöst. Die Prallwand 11 kann daher in der Knie-Schubrichtung K um eine Sollbiegestelle 33 verschwenkt werden. Die Sollbiegestelle 33 verläuft nach Art eines Filmscharnieres entlang einer Übergangskante zwischen dem Bodenabschnitt 15 und der Prallwand 11. Entsprechend verläuft eine weitere Sollbiegestelle 35 ebenfalls als Filmscharnier entlang einer Übergangskante zwischen den Bodenabschnitt 15 und der Rückwand 17 des Ablagefaches 3, so dass die Prallwand 11 und der Bodenabschnitt 15 des Ablagefaches 3 bis zur Rückwand 17 schwenkbar sind.

### Bezugszeichenliste

- 1: Instrumententafel
- 3: Ablagefach
- 5: Türinnenverkleidung
- 7: A-Säulenverkleidung
- 9: Türschweller
- 11: Prallwand
- 15: Bodenabschnitt
- 17: Rückwand
- 19: Schraubverbindung
- 21: Befestigungsflansch
- 23: Seitenwand
- 25: Anschlagteile der Keilverbindung
- 27: Ausnehmungen der Keilverbindung
- 29: Instrumententafel-Wandabschnitt
- 31: Hinterschneidungen
- 33, 35: Sollbiegestellen
- K: Knie-Schubrichtung
- α: Keilwinkel

## Patentansprüche

1. Instrumententafel für ein Fahrzeug mit einem zum Fahrzeuginnenraum offenen Ablagefach (3), das zumindest teilweise von einer Prallwand (11) begrenzt ist, die im Fahrzeugkollisionsfall in einer Schubrichtung (K) eines Fahrzeuginsassen-Knies verlagerbar ist, **dadurch gekennzeichnet, dass** die Prallwand (11) des Ablagefaches (3) auf zumindest einem Bewegungsanschlag (27) abgestützt ist, der eine Bewegung der Prallwand (11) entgegen der Schubrichtung (K) begrenzt und in Schubrichtung (K) zulässt.

2. Instrumententafel nach Anspruch 1, **dadurch gekennzeichnet, dass** zur Ausbildung des Bewegungsanschlags (27) die Prallwand (11) über eine Keilverbindung an einen seitlichen Stützabschnitt (7, 29), etwa einer A-Säulenverkleidung oder einem Instrumententafel-Wandabschnitt, angebunden ist.

3. Instrumententafel nach Anspruch 2, **dadurch gekennzeichnet, dass** die Keilverbindung zwischen der Prallwand (11) und dem Stützabschnitt (7, 29) durch ein keilförmiges Anschlagteil (25) und eine korrespondierende keilförmige Ausnehmung (27) gebildet ist, in der das Anschlagteil (25) eingesetzt ist.

4. Instrumententafel nach Anspruch 2 oder 3, **dadurch gekennzeichnet, dass** der Keilwinkel (α) einander zugewandter Keilflächen der Keilverbindung so ausgelegt ist, dass bei einer Belastung der Prallwand (11) entgegen der Schubrichtung (K) die Prallwand (11) gegen den Bewegungsanschlag (27) gedrückt ist, und bei einer Belastung in Schubrichtung (K) die Keilverbindung lösbar ist.

5. Instrumententafel nach Anspruch 3 oder 4, **dadurch gekennzeichnet, dass** das keilförmige Anschlagteil (25) der Keilverbindung nach Art einer Schwalbenschwanzführung in die keilförmige Ausnehmung (27) einschiebbar ist.

6. Instrumententafel nach einem der vorhergehenden Ansprüche, **dadurch gekennzeichnet, dass** das Ablagefach (3) einen insbesondere horizontalen Bodenabschnitt (15) aufweist, der in die Prallwand (11) und/oder in eine Ablagefach-Rückwand (17) übergeht.

7. Instrumententafel nach Anspruch 6, **dadurch gekennzeichnet, dass** an den Übergangskanten zwischen dem Bodenabschnitt (15), der Prallwand (11) und/oder der Rückwand (17) Sollbiegestellen (33, 35) vorgesehen sind.

8. Instrumententafel nach einem der vorhergehenden Ansprüche, **dadurch gekennzeichnet, dass** das Ablagefach (3) mit der Prallwand (11) als separates Bauteil mit der Instrumententafel (1) verbindbar ist.

9. Instrumententafel nach Anspruch 8, **dadurch gekennzeichnet, dass** das Ablagefach (3) mit seiner Rückwand (17) an der Instrumententafel (1) befestigt, insbesondere verschraubt, ist und mit seiner Prallwand (11) seitlich an dem Stützabschnitt (7, 29) angebunden ist.

10. Instrumententafel nach einem der Ansprüche 3 bis 9, **dadurch gekennzeichnet, dass** das Anschlagteil (25) und/oder die Ausnehmung (27) materialeinheitlich und/oder einstückig im Ablagefach (3) integriert sind, das insbesondere ein Kunststoffspritzgussteil ist.

11. Instrumententafel nach einem der vorhergehenden Ansprüche, **dadurch gekennzeichnet, dass** die Prallwand (11) mit einer Versteifungsstruktur ausgebildet ist, insbesondere mit einem doppelwandigen Hohlprofil, Verstärkungsrippen und/oder versteifenden Einsatzteilen.

## Claims

1. Instrument panel for a vehicle, with a storage compartment (3) which is open towards the vehicle interior and is at least partially delimited by an impact wall (11) which is displaceable in a sliding direction (K) of a vehicle occupant's knee in the event of a vehicle collision, **characterized in that** the impact wall (11) of the storage compartment (3) is supported on at least one movement stop (27) which restricts a movement of the impact wall (11) counter to the sliding direction (K) and permits said movement in the sliding direction (K).

2. Instrument panel according to Claim 1, **characterized in that**, in order to form the movement stop (27), the impact wall (11) is connected to a lateral supporting section (7, 29), for example an A-pillar lining or an instrument panel wall section, via a wedge connection.

3. Instrument panel according to Claim 2, **characterized in that** the wedge connection between the impact wall (11) and the supporting section (7, 29) is formed by a wedge-shaped stop part (25) and a corresponding wedge-shaped recess (27) in which the stop part (25) is inserted.

4. Instrument panel according to Claim 2 or 3, **characterized in that** the wedge angle (α) of mutually facing wedge surfaces of the wedge connection is designed in such a manner that, in the event of loading of the impact wall (11) counter to the sliding direction (K), the impact wall (11) is pressed against the movement stop (27), and, in the event of loading in the sliding direction (K), the wedge connection can be released.

5. Instrument panel according to Claim 3 or 4, **characterized in that** the wedge-shaped stop part (25) of the wedge connection can be pushed into the wedge-shaped recess (27) in the manner of a dovetail guide.

6. Instrument panel according to one of the preceding claims, **characterized in that** the storage compartment (3) has an in particular horizontal base section (15) which merges into the impact wall (11) and/or into a storage compartment rear wall (17).

7. Instrument panel according to Claim 6, **characterized in that** predetermined bending points (33, 35) are provided at the transition edges between the base section (15), the impact wall (11) and/or the rear wall (17).

8. Instrument panel according to one of the preceding claims, **characterized in that** the storage compartment (3) with the impact wall (11) as a separate component can be connected to the instrument panel (1).

9. Instrument panel according to Claim 8, **characterized in that** the storage compartment (3) is fastened, in particular screwed, with the rear wall (17) thereof to the instrument panel (1) and is connected by the impact wall (11) thereof laterally to the supporting section (7, 29).

10. Instrument panel according to one of Claims 3 to 9, **characterized in that** the stop part (25) and/or the recess (27) are of the same material as and/or are integrated integrally in the storage compartment (3) which, in particular, is an injection-moulded plastics part.

11. Instrument panel according to one of the preceding claims, **characterized in that** the impact wall (11) is designed with a stiffening structure, in particular with a double-walled hollow profile, reinforcing ribs and/or stiffening inserts.

## Revendications

1. Tableau de bord pour un véhicule comprenant un vide-poches (3) ouvert vers l'habitacle du véhicule, qui est limité au moins en partie par une paroi d'impact (11) qui peut être déplacée dans le cas d'une collision du véhicule dans une direction de poussée (K) d'un genou d'un occupant du véhicule, **caractérisé en ce que** la paroi d'impact (11) du vide-poches (3) est supportée sur au moins une butée de déplacement (27) qui limite un déplacement de la paroi d'impact (11) à l'encontre de la direction de poussée (K) et l'autorise dans la direction de poussée (K).

2. Tableau de bord selon la revendication 1, **caractérisé en ce que** pour réaliser la butée de déplacement (27), la paroi d'impact (11) est reliée par le biais d'un clavetage à une portion de support latérale (7, 29), par exemple un habillage du montant A ou une portion de paroi du tableau de bord.

3. Tableau de bord selon la revendication 2, **caractérisé en ce que** le clavetage entre la paroi d'impact (11) et la portion de support (7, 29) est formé par une partie de butée en forme de clavette (25) et un évidement correspondant en forme de clavette (27), dans lequel est insérée la partie de butée (25).

4. Tableau de bord selon la revendication 2 ou 3, **caractérisé en ce que** l'angle de clavetage (α) des faces de clavette tournées l'une vers l'autre du clavetage est conçu de telle sorte que dans le cas d'une sollicitation de la paroi d'impact (11) à l'encontre de la direction de poussée (K), la paroi d'impact (11) soit pressée contre la butée de déplacement (27), et dans le cas d'une sollicitation dans la direction de poussée (K), le clavetage puisse être libéré.

5. Tableau de bord selon la revendication 3 ou 4, **caractérisé en ce que** la partie de butée en forme de clavette (25) du clavetage peut être enfoncée à la manière d'un guidage en queue d'aronde dans l'évidement en forme de clavette (27).

6. Tableau de bord selon l'une quelconque des revendications précédentes, **caractérisé en ce que** le vide-poches (3) présente une portion de fond (15) notamment horizontale, qui se prolonge par la paroi d'impact (11) et/ou par une paroi arrière (17) du vide-poches.

7. Tableau de bord selon la revendication 6, **caractérisé en ce que** des zones destinées à la flexion (33, 35) sont prévues au niveau des arêtes de transition entre la portion de fond (15), la paroi d'impact (11) et/ou la paroi arrière (17).

8. Tableau de bord selon l'une quelconque des revendications précédentes, **caractérisé en ce que** le vide-poches (3) avec la paroi d'impact (11) peut être connecté au tableau de bord (1) sous forme de composant séparé.

9. Tableau de bord selon la revendication 8, **caractérisé en ce que** le vide-poches (3) est fixé, notamment vissé, au tableau de bord (1) par sa paroi arrière (17), et est raccordé à la portion de support (7, 29) latéralement par sa paroi d'impact (11).

10. Tableau de bord selon l'une quelconque des revendications 3 à 9, **caractérisé en ce que** la partie de butée (25) et/ou l'évidement (27) sont intégrés en continuité de matière et/ou d'une seule pièce dans le vide-poches (3), qui est notamment une pièce moulée par injection de plastique.

11. Tableau de bord selon l'une quelconque des revendications précédentes, **caractérisé en ce que** la paroi d'impact (11) est réalisée avec une structure de renforcement, notamment avec un profilé creux à double paroi, des nervures de renforcement et/ou des pièces d'insertion rigidifiantes.
